**Europäisches Patentamt**

**European Patent Office**

**Office européen des brevets**

(19)

(11) Veröffentlichungsnummer: **0 365 069**
**A2**

(12) ## EUROPÄISCHE PATENTANMELDUNG

(21) Anmeldenummer: 89202525.5

(51) Int. Cl.⁵: **H04N 5/907**

(22) Anmeldetag: 09.10.89

(30) Priorität: 15.10.88 DE 3835171

(43) Veröffentlichungstag der Anmeldung:
25.04.90 Patentblatt 90/17

(84) Benannte Vertragsstaaten:
DE FR GB

(71) Anmelder: **Philips Patentverwaltung GmbH**
**Wendenstrasse 35 Postfach 10 51 49**
**D-2000 Hamburg 1(DE)**

(84) DE

Anmelder: **N.V. Philips' Gloeilampenfabrieken**
**Groenewoudseweg 1**
**NL-5621 BA Eindhoven(NL)**

(84) FR GB

(72) Erfinder: **Riegel, Maximillian, Dipl.-Ing.**
**Herrnackerstrasse 65**
**D-8500 Nürnberg 10(DE)**

(74) Vertreter: **Peuckert, Hermann, Dipl.-Ing. et al**
**Philips Patentverwaltung GmbH**
**Wendenstrasse 35 Postfach 10 51 49**
**D-2000 Hamburg 1(DE)**

(54) **Speicher für Videosignale.**

(57) Der beschriebene Speicher ist für Videosignale gedacht, deren Bildinformation in Halbbilder und die Information der Halbbilder in Zeilen gegliedert ist. Bei den zu speichernden Videosignalen können einzelne Halbbildinformationen fehlen. Beim Auslesen aus dem Speicher sollen Halbbilder durch eine vertikale Austastlücke voneinander getrennt sein.

Zur Vermeidung einer umfangreichen Schreib-Lese-Steuerung für den Speicher und um gleichzeitig die Möglichkeit zu schaffen, eine Interpolationsschaltung (IP) an ihn anzuschließen, mit der Näherungswerte für die ausgelassenen Halbbilder gewonnen werden, ist eine Serienschaltung aus drei Schieberegistern (SR1, SR2, SR3) vorgesehen. Ein Zählwerk (ZW) erzeugt und zählt die Schiebetakte für die Schieberegister (SR1, SR2, SR3). über einen ersten steuerbaren Umschalter (U1) werden dem ersten Schieberegister (SR1) entweder die Daten eines ankommenden Halbbildes (E1) oder die Daten (E3) des im dritten Schieberegister (SR3) gespeicherten Halbbildes zugeführt. In einer dritten Stellung des steuerbaren Umschalters (U1) werden dem ersten Schieberegister (SR1) die Daten (E2) einer Interpolationsschaltung (IP) zugeführt, die die Daten eines ausgelassenen Halbbildes aus den beiden benachbarten Halbbildern durch Interpolation erzeugt.

An einem Ausgang (A) der Schaltung ist das vervollständigte, in ein vorgegebenes Zeitraster eingeordnete Videosignal abnehmbar.

Fig. 1

## Speicher für Videosignale

Die Erfindung betrifft einen Speicher für Videosignale, deren Bildinformation in Halbbilder und die Information der Halbbilder in Zeilen gegliedert ist, bei denen einzelne Halbbildinformationen fehlen können und deren Halbbilder beim Auslesen aus dem Speicher durch eine vertikale Austastlücke voneinander getrennt sind.

Speicher für Videosignale - auch Videospeicher, Videodatenspeicher oder Bildspeicher genannt - sind bekannt. So ist z.B. in der DE 27 03 578 C2 ein Videodatenspeicher beschrieben, der aus mehreren Speichermatritzen, d.h. nach Zeilen und Spalten angeordneten Speicherplätzen besteht. Der Zugriff auf den Inhalt der Speicherplätze erfolgt über Adressen für die Speicherplätze (wahlfreier Zugriff).

Der Einsatz eines solchen Videodatenspeichers, z.B. auf der Empfangsseite eines Übertragungssystems, bei dem die Codierung der Bildinformation zu einer zeitabhängigen Bitrate führt, erfordert - wie den folgenden Ausführungen zu entnehmen ist - eine aufwendige Schreib-Lese-Steuerung.

Eine Codierung, die zu einer zeitabhängigen Bitrate führt, ist z.B. in der DE 27 10 119 beschrieben. Bei einer solchen Codierung werden die Videobilder blockweise (ausschnittsweise) codiert, wobei für jeden Block eine von seinem und dem Inhalt des gleichen Blockes des vorangegangenen Bildes abhängige Zahl von Bits anfällt. Nicht selten tritt dabei der Fall auf, daß für einen Block kei ne bildinformationstragenden Bits anfallen, da sich der Inhalt gegenüber dem gleichen Block des vorangegangenen Bildes nicht geändert hat.

Die derart unregelmäßig anfallenden Bits werden in einen Pufferspeicher eingeschrieben und aus diesem mit konstanter Bitrate wieder ausgelesen. Der Füllstand des Pufferspeichers muß ständig kontrolliert werden, damit sein Überlauf verhindert wird. Bei drohendem Überlauf werden ganze Halbbilder nicht codiert und dem Empfänger wird statt des codierten Halbbildes lediglich eine Information über die Auslassung eines Halbbildes übertragen. Auf der Empfängerseite werden die übertragenen Daten zunächst in einen empfängerseitigen Pufferspeicher eingelesen und dann mit zeitabhängiger Bitrate in einen Bildspeicher übertragen. Mit Hilfe des Bildspeichers müssen die ausgelassenen Halbbilder durch Interpolation wenigstens näherungsweise zurückgewonnen werden, um grobe Bildstörungen zu vermeiden. Das gesamte Videosignal muß außerdem in ein vorgeschriebenes Zeitraster gebracht werden. Teil dieses Zeitrasters ist die sogenannte vertikale Austastlücke -eine Signalpause zwischen zwei Halbbildern. Zur Interpolation benötigt man die Bilddaten zweier Zeilen des vorhergehenden und zweier Zeilen des nachfolgenden Halbbildes. Allein diese Forderung macht deutlich, welch aufwendige Schreib-Lese-Vorrichtungen und deren Steuerung notwendig sind, wenn als Bildspeicher ein Speicher mit ausschließlich wahlfreiem Zugriff verwendet wird.

Unter der Voraussetzung, daß die notwendigen Steuersignale, die z.B. die Auslassung eines Halbbildess oder die Auslassung einer Blockinformation beinhalten, zur Verfügung stehen, liegt der Erfindung die Aufgabe zugrunde, einen Speicher für Videosignale der eingangs genannten Art anzugeben, bei dem die Möglichkeit besteht, durch ge ringfügige Änderungen an ihn eine Interpolationsschaltung anzuschließen, mit der Näherungswerte für ausgelassene Halbbilder gewonnen werden.

Diese Aufgabe wird durch einen Speicher gelöst, der durch folgende Merkmale gekennzeichnet ist:

1.1. Eine Serienschaltung aus drei Schieberegistern, von denen das erste und dritte Schieberegister Speicherplätze für eine Zeile mehr enthalten als die Anzahl der informationstragenden Zeilen beträgt, aus denen ein Halbbild besteht, und das zweite Schieberegister Speicherplätze für eine Zeile enthält,

1.2. einen ersten steuerbaren Umschalter am Eingang des ersten Schieberegisters, über den dem ersten Schieberegister entweder die Daten eines ankommenden Halbbildes oder die Daten des im dritten Schieberegister gespeicherten Halbbildes zugeführt werden,

1.3. ein Zählwerk, das die Schiebetakte für die Schieberegister erzeugt und zählt und während der vertikalen Austastlücke bei einem Halbbild Schiebetakte für eine Zeile mehr und beim darauffolgenden Halbbild Schiebetakte für zwei Zeilen mehr erzeugt als jedes Halbbild informationstragende Zeilen enthält.

Eine erste vorteilhafte Ausgestaltung des erfindungsgemäßen Speichers ist durch folgende Merkmale gekennzeichnet:

2.1. der erste steuerbare Umschalter enthält eine dritte Stellung, in der dem ersten Schieberegister die Daten einer Interpolationsschaltung zugeführt werden,

2.2. ein Eingang der Interpolationsschaltung ist mit dem Ausgang des ersten Schieberegisters verbunden und dem zweiten Eingang der Interpolationsschaltung werden die Daten eines ankommenden Halbbildes zugeführt,

2.3. zwischen dem Ausgang des ersten Schieberegisters und dem Eingang des zweiten Schieberegisters liegt ein zweiter steuerbarer Umschalter, über den dem zweiten Schieberegister entweder die Ausgangsdaten des ersten Schieberegisters oder die Daten eines ankommenden Halbbildes zugeführt werden.

Weitere vorteihafte Ausgestaltungen betreffen die Interpolationsschaltung sowie deren Anschluß an den erfindungsgemäßen Speicher und sind ebenfalls in den Unteransprüchen angegeben.

Anhand der Figuren und anhand eines Ausführungsbeispieles soll die Erfindung näher erläutert werden.

Es zeigen:

Fig. 1 das Prinzipschaltbild eines Ausführungsbeispieles nach der Erfindung und

Fig. 2 Vorgänge in einer Reihenschaltung von drei Schieberegistern, die Bestandteile des erfindungsgemäßen Speichers sind.

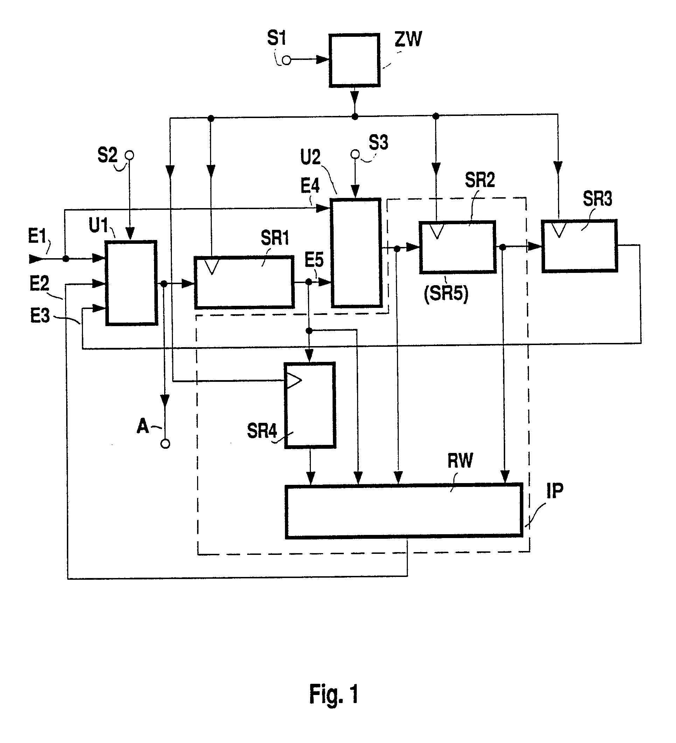

In Fig. 1 werden die Daten eines in den erfindungsgemäßen Speicher eingelesenen Halbbildes auf eine Eingangsleitung E1 eines steuerbaren Umschalters U1 gegeben. Über eine Steuerleitung S2 wird - je nach Steuersignal - ein bestimmter Eingang des Umschalters U1 mit seinem Ausgang A verbunden. Der Ausgang A des steuerbaren Umschalters U1 ist gleichzeitig der Ausgang der Gesamtschaltung, an dem das gesamte Videosignal - eingeordnet in ein vorgeschriebenes, für Videodaten übliches Zeitraster - abgenommen werden kann.

Unterscheiden sich die Daten eines Bildpunktes des einzulesenden Halbbildes von den Daten des entsprechenden Bildpunktes des vorangegangenen Halbbildes mit gleicher Halbbildnummer (Nr. 1 oder Nr. 2), so wird aufgrund des anliegenden Steuersignales der Eingang E1 mit dem Ausgang A des Umschalters U1 verbunden und die anliegenden Daten werden in die ersten Stufen eines Schieberegisters SR1 übernommen. Mit der Übernahme werden die schon gespeicherten Daten um die gleiche Anzahl von Stufen verschoben, und zwar gilt dies auch für Schieberegister SR2 und SR3, die mit dem Schieberegister SR1 in Serie geschaltet sind. Die Verbindung zwischen Ausgang des Schieberegisters SR1 und Eingang des Schieberegisters SR2 wird über einen zweiten steuerbaren Umschalter U2 hergestellt. über eine Steuerleitung S3 wird der Umschalter U2 im vorliegenden Fall so gesteuert, daß er seinen Eingang E5 mit seinem Ausgang verbindet,

Besteht Übereinstimmung zwischen den Daten des Bildpunktes eines ankommenden Halbbildes und den Daten des entsprechenden Bildpunktes (Bildpunkt mit den gleichen Koordinaten) des vorangegangenen Halbbildes gleicher Nummer, so wird - gesteuert über die Steuerleitung S2 - die Eingangsleitung E2 des Umschalters U1 mit seinem Ausgang verbunden. Die Daten des entsprechenden Bildpunktes des vorangegangenen Halbbildes gleicher Nummer werden dann von der letzten Stufe des Schieberegisters SR3 in die erste Stufe des Schieberegisters SR1 übernommen.

Nachzutragen ist, daß die Übereinstimmung der Daten von entsprechenden Bildpunkten - wie oben dargelegt - schon auf der Sendeseite festgestellt wird. Statt die gleichen Daten nocheinmal zu übertragen, werden zur Datenreduktion wesentlich kürzere Impulsfolgen übertragen, die diese Übereinstimmung kennzeichnen. Diese Impulsfolgen werden u.a. auf der Empfängerseite in das Steuersignal auf der Leitung S2 umgesetzt.

Die Tatsache, daß nach jedem Schiebetakt - sofern er nicht in die vertikale Austastlücke zwischen zwei Halbbilder fällt - die Daten der sich im oben erläuterten Sinne entsprechenden Punkte am Eingang E1 und am Eingang E2 befinden, ist eine Folge der Zahl der Stufen der Schieberegister SR1, SR2 und SR3 und der darauf abgestimmten Anzahl von Schiebetakten pro Halbbild. Genauer gilt, daß die Schieberegister SR1 und SR2 für zwei Zeilen mehr Speicherraum besitzen als die Gesamtzahl der Zeilen eines Halbbildes beträgt und daß das Schieberegister SR2 Speicherraum für eine Zeile besitzt. Während der vertikalen Austastlücke, also während der Zeit, zu der am Ausgang A keine Daten anliegen, werden die Schieberegister von einem Zählwerk ZW, das über eine Steuerleitung S1 gesteuert wird, mit zusätzlichen Schiebetakten versehen, und zwar alternierend von Austastlücke zu Austastlücke mit Schiebetakten für eine Zeile und mit Schiebetakten für zwei Zeilen. Die Vorgänge in den Schieberegistern SR1, SR2 und SR3 werden weiter unten noch genauer erläutert werden. Insbesondere wird aus diesen Erläuterungen hervorgehen, an welchen Stellen der Schaltung nach Fig. 1 das Ausgangssignal bei sogenannter Überabtastung abzugreifen ist.

Fehlt im Videosignal auf der Eingangsleitung E1 ein Halbbild, so wird das fehlende Halbbild mit einer Interpolationsschaltung IP aus dem zuletzt empfangenen und im Schieberegister SR1 gespeicherten Halbbild und dem nach dem fehlenden Halbbild ankommenden Halbbild gewonnen. Die Information über ein fehlendes Halbbild steckt u.a. in den Steuersignalen auf den Leitungen S1 und S2; durch sie wird die Eingangsleitung E2 mit dem Ausgang A des Um schalters U1 verbunden und die Eingangsleitung E4 des Umschalters U2 mit dessen Ausgang über die Eingangsleitung E2 wird das Ausgangssignal der Interpolationsschaltung IP in das Schieberegister SR1 und über die Eingangsleitung E4 das ankommende Halbbild in das Schieberegister SR2 bzw. SR3 eingeschrieben. Die Daten von Bildpunkten einer Zeile des fehlenden Halbbildes werden aus den Daten der Bildpunkte zweier aufeinanderfolgender Zeilen des ankommenden und des im Schieberegister SR1 gespeicherten Halbbildes gewonnen. Diese Daten liegen am Eingang und Ausgang des Schieberegisters SR2 und am Ein-und Ausgang eines Schieberegisters SR4 an. Der Eingang des Schieberegisters SR4 ist mit dem Ausgang des Schieberegisters SR1 verbunden; auch das Schieberegister SR4 enthält Speicherplätze für eine Zeile. Ein- und Ausgänge der Schieberegister SR4 und SR2 sind mit Eingängen eines Rechenwerkes RW verbunden, das aus den Daten von vier Bildpunkten die Daten eines Bildpunktes des fehlenden Halbbildes in Echtzeit errechnet. Im vorliegenden Beispiel bildet das Rechenwerk das arithmetische, ungewogene Mittel aus den erwähnten Daten. Die errechneten Daten werden - wie schon oben erwähnt - in das Schieberegister SR1 eingeschrieben.

Das Schieberegister SR2 hat eine Doppelfunktion. Es ist einerseits Bestandteil der Interpolationsschaltung IP und ist als solcher mit den in Klammern gesetzten Bezugszeichen SR5 versehen; andererseits ist es auch als Schieberegister SR2 dann notwendig, wenn die Interpolationsschaltung IP nicht erforderlich ist, also nie Halbbilder ausgelassen werden, wie eingangs schon angedeutet und nun näher ausgeführt werden soll.

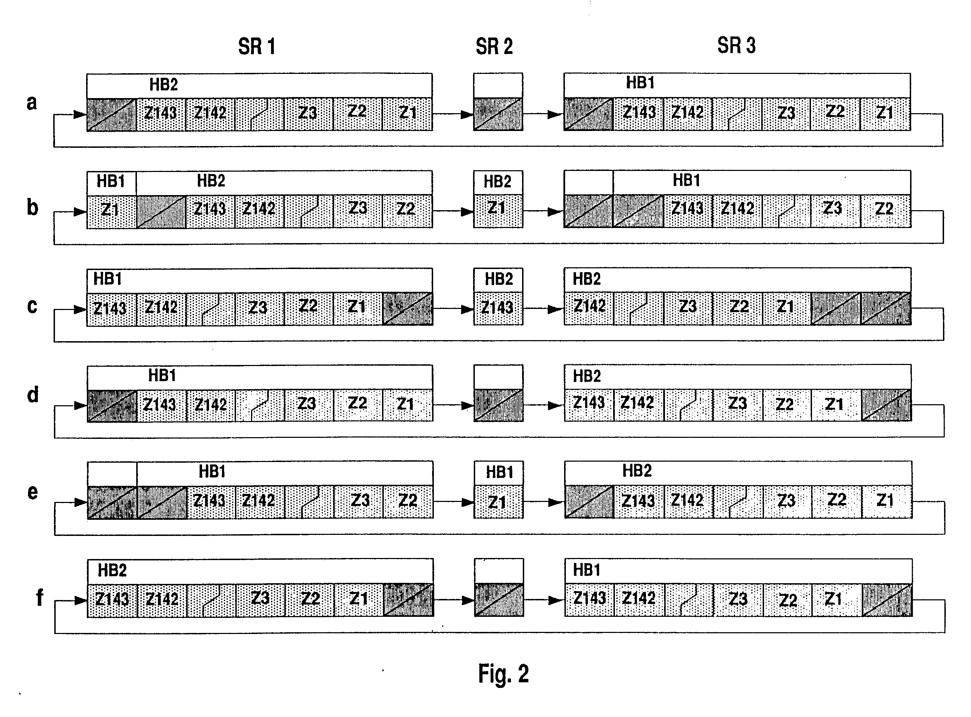

Fig. 2 zeigt symbolisch sechs Momentaufnahmen von Zuständen a bis f der Schieberegister SR1, SR2 und SR3.

Ein Halbbild enthält im vorliegenden Beispiel 143 informationstragende Zeilen. In der Momentaufnahme a ist der Informationsinhalt eines zweiten Halbbildes HB2 im Schieberegister SR1 gespeichert, und zwar in den mit Z143, Z142...Z3, Z2, Z1 symbolisierten Speicherplätzen. Entsprechendes gilt für ein erstes Halbbild HB1 und das Schieberegister SR3. Jedes Rechteck der Schieberegister SR1, SR2 und SR3 der Fig. 2 symbolisiert den Speicherplatz für eine Zeile. In den diagonal durchstrichenen Rechtecken ist keine Information abgespeichert.

Erkennbar ist, daß die Schieberegister SR1 und SR3 für eine Zeile mehr Speicherraum enthalten, als ein Halbbild aus informationstragenden Zeilen besteht.

Nach einer Anzahl von Schiebetakten, die einer Zeile entspricht - kurz eine Zeile später - ergibt sich die Momentaufnahme b. Die im linken Rechteck des Schieberegisters SR1 gespeicherte Information der Zeile Z1 eines Halbbildes HB1 kann entweder identisch sein mit Informationen der im letzten Rechteck Z1 der Momentaufnahme a gespeicherten Information, sie kann auch durch das ankommende Halbbild ersetzt worden sein oder sie besteht aus einer Mischung von beiden Informationen oder aus Daten, die durch die Interpolationsschaltung IP errechnet worden sind - vergleiche hierzu den Umschalter U1 von Fig. 1 und die Erläuterung zu dessen Funktion. Entsprechendes gilt für alle Informationen, die in das Schieberegister SR1 eingelesen werden.

Die Momentaufnahme c zeigt den Zustand der Schieberegister SR1, SR2 und SR3 nach 143 Zeilen, d.h., nach Ablauf aller informationstragenden Zeilen eines Halbbildes. Danach beginnt die Austastlücke, in der das Zählwerk ZW Schiebetakte für zwei Zeilen liefert. In der noch ver bleibenden Dauer der Austastlücke werden keine Schiebetakte geliefert. Die Momentaufnahme d und e zeigen die Zustände nach einer bzw. zwei Zeilen, um die der Inhalt der Schieberegister während der Austastlücke verschoben worden ist.

Die Momentaufnahme f zeigt den Zustand, in dem nach der letzten Austastlücke 143 informationstragende Zeilen vergangen sind, also kurz bevor eine neue Austastlücke beginnt. In dieser Austastlücke wird der gesamte Inhalt des Schieberegisters SR1, SR2 und SR3 nur um eine Zeile verschoben, so daß sich der Form nach wieder die Momentaufnahme a ergibt.

Die Fig. 2 läßt auch ohne weiteres erkennen, wo die Daten abgegriffen werden müssen, die iür eine sogenannte Überabtastung erforderlich sind. Bei der hier gemeinten Überabtastung wird die Zahl der Zeilen eines Bildes verdoppelt, und zwar werden dann Zeilen gleicher Nummer aufeinanderfolgender Halbbilder gleichzeitig verarbeitet. Zu diesem Zweck müssen die Daten der Zeilen gleicher Nummer auch gleichzeitig vorliegen. Das ist - wie die Momentaufnahme a zeigt - am Eingang und Ausgang des Schieberegisters SR1 der Fall, wenn an dessen Eingang die Daten eines ersten Halbbildes eingegeben werden. Werden am Eingang des Schieberegisters SR1 die Daten eines zweiten Halbbildes eingegeben, so muß der Abgriff wiederum am Eingang des Schieberegisters SR1 und am Ausgang des Schieberegisters SR2 erfolgen (vergleiche hierzu Momentaufnahme e). Für die Überabtastung ist also lediglich ein weiterer Umschalter erforderich, der, gesteuert von einem Halbbildsignal, an den Ausgang des Schieberegisters SR1 oder an den Ausgang des Schieberegisters SR2 angeschlossen wird.

Der Interpolationsschaltung IP werden das Ausgangssignal des Schieberegisters SR1 und die Daten des ankommenden Halbbildes zugeführt; während der Berechnung des ausgelassenen Halbbildes ist die Verbindung zwischen den Schieberegistern SR1 und SR2 unterbrochen.

Gesetzt den Fall, ein erstes Halbbild ist ausgelassen worden, so wird dieses aus den Daten des im Schieberegister SR1 gespeicherten zweiten Halbbildes (vergleiche Momentaufnahme a) und dem auf der Eingangsleitung E1 anliegenden zweiten Halbbild berechnet, das gleichzeitig über den Umschalter U2 in das Schieberegister SR2 eingelesen wird. Da Ein- und Ausgänge der Schieberegister SR2 und SR4 mit dem Rechenwerk verbunden sind (vergleiche Fig. 1) und diese Schieberegister zu Beginn des ankommenden zweiten Halbbildes leer sind (oder auch mit Grauwerten geladen sein können), werden bei der Berechnung der ersten Zeile des ausgelassenen ersten Halbbildes die Daten der ersten Zeile des ankommenden (auf der Eingangsleitung E1 anliegenden) zweiten Halbbildes, die erste Zeile des im Schieberegister SR1 gespeicherten zweiten Halbbildes HB2 sowie die in den Schieberegistern SR2 und SR4 gespeicherten Grauwerte verwendet. Bei der Berechnung der zweiten Zeile wird die zweite Zeile des ankommenden und die im Schieberegister SR2 gespeicherte erste Zeile sowie die jetzt am Ausgang des Schieberegisters SR1 anliegende zweite Zeile und die im Schieberegister SR4 gespeicherte erste Zeile verwendet. Entsprechendes gilt für alle weiteren Zeilen.

Ist das fehlende Halbbild ein zweites Halbbild, so treffen die ersten Daten des darauffolgenden ersten Halbbildes dann ein, wenn sich die Schieberegister in einem Zustand befinden, den die Momentaufnahme d zeigt. In diesem Augenblick sind in den Schieberegistern SR2 und SR4 Grau werte gespeichert. Ist die erste Zeile des ersten Halbbildes, das vor dem ausgelassenen zweiten Halbbild steht, im Schieberegister SR2 und die erste Zeile des ankommenden (zweiten) Halbbildes im Schieberegister SR4 gespeichert, so beginnt das Rechenwerk mit der Berechnung der ersten Zeile des ausgelassenen zweiten Halbbildes.Ihm wird über den Ausgang des Schieberegisters SR1 die zweite Zeile des vorangegangenen Halbbildes und über den Ausgang des Schieberegisters SR4 die erste Zeile des vorangegangenen Halbbildes zugeführt sowie über den Umschalter U2 die zweite Zeile des ankommenden Halbbildes und über den Ausgang des Schieberegisters SR2 die erste Zeile des ankommenden Halbbildes. Ist die erste Zeile berechnet, werden die Daten der zweiten Zeile des ausgelassenen Bildes ermittelt und zwar aus der zweiten und dritten Zeile des vorangegangenen Bildes sowie aus der ersten und zweiten Zeile des ankommenden Bildes. Entsprechendes gilt für alle weiteren Zeilen.

**Ansprüche**

1. Speicher für Videosignale, deren Bildinformation in Halbbilder und die Information der Halbbilder in Zeilen gegliedert ist, bei denen einzelne Halbbildinformationen fehlen können und deren Halbbilder beim Auslesen aus dem Speicher durch eine vertikale Austastlücke voneinander getrennt sind,

**gekennzeichnet durch:**

1.1. Eine Serienschaltung aus drei Schieberegistern (SR1, SR2, SR3), von denen das erste und dritte Schieberegister (SR1, SR2) Speicherplätze für eine Zeile mehr enthalten als die Anzahl der informationstragenden Zeilen beträgt, aus denen ein Halbbild besteht, und das zweite Schieberegister (SR2) Speicherplätze für eine Zeile enthält,

1.2. einen ersten steuerbaren Umschalter (U1) am Eingang des ersten Schieberegisters (SR1), über den dem ersten Schieberegister (SR1) entweder die Daten eines ankommenden Halbbildes (E1) oder die Daten des im dritten Schieberegister (SR3) gespeicherten Halbbildes zugeführt werden,

1.3. ein Zählwerk (ZW), das die Schiebetakte für die Schieberegister (SR1, SR2, SR3) erzeugt und zählt und während der vertikalen Austastlücke bei einem Halbbild Schiebetakte für eine Zeile mehr und beim darauffolgenden Halbbild Schiebetakte für zwei Zeilen mehr erzeugt als jedes Halbbild informationstragende Zeilen enthält.

2. Speicher nach Anspruch 1,
**gekennzeichnet durch**
folgende Merkmale:

2.1. der erste steuerbare Umschalter (U1) enthält eine dritte Stellung, in der dem ersten Schieberegister (SR1) die Daten einer Interpolationsschaltung (IP) zugeführt werden,

2.2. ein Eingang der Interpolationsschaltung (IP) ist mit dem Ausgang des ersten Schieberegisters (SR1) verbunden und dem zweiten Eingang der Interpolationsschaltung (IP) werden die Daten eines ankommenden Halbbildes zugeführt,

2.3. zwischen dem Ausgang des ersten Schieberegisters (SR1) und dem Eingang des zweiten Schieberegisters (SR2) liegt ein zweiter steuerbarer Umschalter (U2), über den dem zweiten Schieberegister (SR2) entweder die Ausgangsdaten des ersten Schieberegisters oder die Daten eines ankommenden Halbbildes zugeführt werden.

3. Speicher nach Anspruch 2,
**dadurch gekennzeichnet,**
daß die Interpolationsschaltung (IP) ein viertes und ein fünftes Schieberegister (SR4, SR5) enthält, jedes dieser Schieberegister (SR4, SR5) Speicherplätze für eine Zeile aufweist und der Ein- und Ausgang eines jeden dieser Schieberegister (SR4, SR5) mit einem Eingang eines Rechenwerkes (RW) verbunden ist.

4. Speicher nach Anspruch 3,
**dadurch gekennzeichnet,** daß die Funktion eines der beiden Schieberegister (SR4, SR5) der Interpolationsschaltung (IP) vom zweiten Schieberegister (SR2) übernommen wird.

**Fig. 1**

Fig. 2

SR 1 SR 2 SR 3

a

b

c

d

e

f

EP 0 365 069 A2

2-Ⅱ-PHD 88-213